# FASCICULE DE BREVET EUROPEEN

(11) **EP 1 712 928 B1**
(45) Date de publication et mention de la délivrance du brevet: **06.08.2008**
(21) Numéro de dépôt: 05300284.6
(22) Date de dépôt: 14.04.2005
(51) Int. Cl.: G01S 1/00

(54) **SYSTEME DE RADIONAVIGATION A CONSTELLATION DE SATELLITES DE POSITIONNEMENT A PHASES DE TRANSMISSION ET D'ANALYSE ALTERNEES**
Radionavigationsvorrichtung mit Ortungsbestimmungssatelliten mit wechselnden Sende- und Analysisphasen
Radionavigation system using positioning satellites with alternating transmission and analysis phases

(43) Date de publication de la demande: 18.10.2006
(73) Titulaire: Alcatel Lucent, 75008 Paris (FR)
(72) Inventeur: DAMIDAUX, Jean-Louis, 31037, TOULOUSE CEDEX 01 (FR); FLAMENT, Didier, 31130, QUINT-FONSEGRIVES (FR)
(74) Mandataire: Chaffraix, Sylvain

(56) Documents cités:
- US-A1- 2003 040 852
- US-B1- 6 462 707

## Description

L'invention concerne le domaine des systèmes de radionavigation par satellites de type RNSS (pour « Radio Navigation Satellite System ») ou GNSS (pour « Global Navigation Satellite System »), et plus précisément l'amélioration des performances de navigation offertes par de tels systèmes.

Dans les systèmes de radionavigation tels que GALILEO ou GPS, la détermination des orbites de rotation des satellites de la constellation de satellites de positionnement et la synchronisation des horloges repose sur le traitement de mesures effectuées par des stations de contrôle terrestres. En raison du positionnement terrestre de ces stations par rapport aux satellites de la constellation (installés sur des orbites moyennes), il est difficile de positionner très précisément ces satellites. Par ailleurs, le positionnement terrestre de ces stations ne permet pas de détecter certaines anomalies des signaux opérationnels, qui se traduisent par exemple par des distorsions de forme d'onde (ou « evil wave form »). Il est rappelé que les signaux opérationnels sont transmis par les satellites de positionnement et sont destinés à permettre la détermination de positions de récepteurs de radionavigation de type GNSS ou RNSS, comme par exemple les récepteurs GPS. Par conséquent, toute anomalie de transmission des signaux opérationnels est susceptible de limiter les performances de navigation des systèmes de radionavigation par satellites.

Afin de tenter d'améliorer les performances de navigation des prochaines générations de système de radionavigation de type GPS, il a été proposé d'implanter dans leurs satellites de positionnement (notamment pour la future version dite « GPS III ») un émetteur/récepteur chargé spécifiquement de déterminer les pseudo-distances entre satellites (ou ISR pour « Inter Satellite Ranging »). Cependant, ces émetteurs/récepteurs utilisent des signaux dédiés qui sont totalement différents des signaux opérationnels, et qui de ce fait doivent faire l'objet de calibration et synchronisation temporelle spécifiques. Cela introduit une complexité additionnelle au niveau des satellites de positionnement et augmente leurs coûts de fabrication. En outre, ces émetteurs/récepteurs ne peuvent pas déterminer les anomalies de transmission des signaux opérationnels puisqu'ils n'agissent que sur des signaux dédiés.

La demande de brevet US2003/0040852A1 décrit un système d'auto-vérification de la qualité du signal émis par un satellite, dans lequel un récepteur attaché au satellite reçoit le signal émis par ce même satellite afin d'effectuer des tests de fiabilité.

L'invention a donc notamment pour but de remédier à tout ou partie des inconvénients précités, et plus précisément d'améliorer les performances de navigation des systèmes de radionavigation par satellites.

Elle propose à cet effet un satellite de positionnement, pour une constellation de satellites d'un système de radionavigation, comprenant :
- des moyens de transmission chargés de transmettre des signaux opérationnels destinés à permettre la détermination de positions de récepteurs de radionavigation,
- des moyens de réception capables de recevoir certains au moins des signaux opérationnels qui sont transmis par les satellites de positionnement de la constellation, en vue (du satellite), et
- des moyens de traitement chargés, d'une part, d'interrompre la transmission des signaux opérationnels par les moyens de transmission à des instants choisis et pendant une durée choisie, et d'autre part, d'analyser lors de chaque interruption de transmission une partie au moins des signaux opérationnels qui ont été reçus par les moyens de réception pendant une partie au moins de la durée choisie.

Le satellite de positionnement selon l'invention peut comporter d'autres caractéristiques qui peuvent être prises séparément ou en combinaison, et notamment :
- ses moyens de traitement peuvent être chargés d'interrompre la transmission de façon périodique, afin d'établir une alternance de phases de transmission et de phases d'analyse dans son satellite ;
   ➢ l'alternance est préférentiellement décalée temporellement d'un satellite de positionnement à l'autre, pour qu'à l'intérieur de chaque période chaque satellite de positionnement de la constellation dispose d'une phase d'analyse pendant laquelle il est le seul à interrompre sa transmission de signaux opérationnels ;
- ses moyens de traitement peuvent être chargés d'analyser la forme d'onde des signaux opérationnels reçus de manière à détecter des distorsions de signal représentatives d'anomalies de transmission et constituant des résultats d'analyse ;
- ses moyens de traitement peuvent être chargés d'analyser les signaux opérationnels reçus de manière à déterminer des pseudo-distances séparant leur satellite des satellites en vue (desquels proviennent les signaux opérationnels), ces pseudo-distances constituant des résultats d'analyse ;
   ➢ il peut comprendre des moyens de calcul chargés de déterminer la position de leur satellite à partir des pseudo-distances qui ont été déterminées par les moyens de traitement et de données de radionavigation complémentaires, chaque position déterminée constituant un résultat d'analyse ;
- ses moyens de traitement peuvent être chargés d'ordonner aux moyens de transmission la transmission de certains au moins des résultats d'analyse à au moins une station terrestre du système de radionavigation et/ou à des récepteurs de radionavigation ;
- ses moyens de réception peuvent être capables de recevoir des signaux opérationnels complémentaires provenant d'au moins une station terrestre du système de radionavigation et destinés à d'autres satellites de positionnement de la constellation. Dans ce cas, les moyens de traitement sont agencés pour ordonner aux moyens de transmission la transmission des signaux opérationnels complémentaires (reçus par les moyens de réception) aux satellites de positionnement qui en sont les destinataires.

L'invention propose également un système de radionavigation par satellites équipé d'une constellation de satellites de positionnement du type de celui présenté ci-avant.

L'invention est particulièrement bien adaptée, bien que de façon non exclusive, aux systèmes de radionavigation par satellites de type GALILEO et GPS.

D'autres caractéristiques et avantages de l'invention apparaîtront à l'examen de la description détaillée ci-après, et des dessins annexés, sur lesquels :
- la figure 1 illustre de façon très schématique une partie d'un système de radionavigation par satellites, selon l'invention,
- la figure 2 illustre de façon schématique et fonctionnelle un exemple de réalisation d'un satellite de positionnement selon l'invention, pour un système de radionavigation par satellites du type de celui illustré sur la figure 1, et
- la figure 3 illustre schématiquement un exemple de cycles (CSi) d'alternance de phases de transmission et d'analyse des 6 satellites de positionnement (Si) de la figure 1.

Les dessins annexés pourront non seulement servir à compléter l'invention, mais aussi contribuer à sa définition, le cas échéant.

L'invention a pour objet de permettre l'amélioration des performances de navigation d'un système de radionavigation par satellites.

Dans ce qui suit, on considère à titre d'exemple non limitatif que le système de radionavigation par satellites est le système GALILEO. Mais, l'invention n'est pas limitée à ce type de système de radionavigation par satellites. Elle concerne en effet d'autres types de système de radionavigation par satellites, comme par exemple le système GPS.

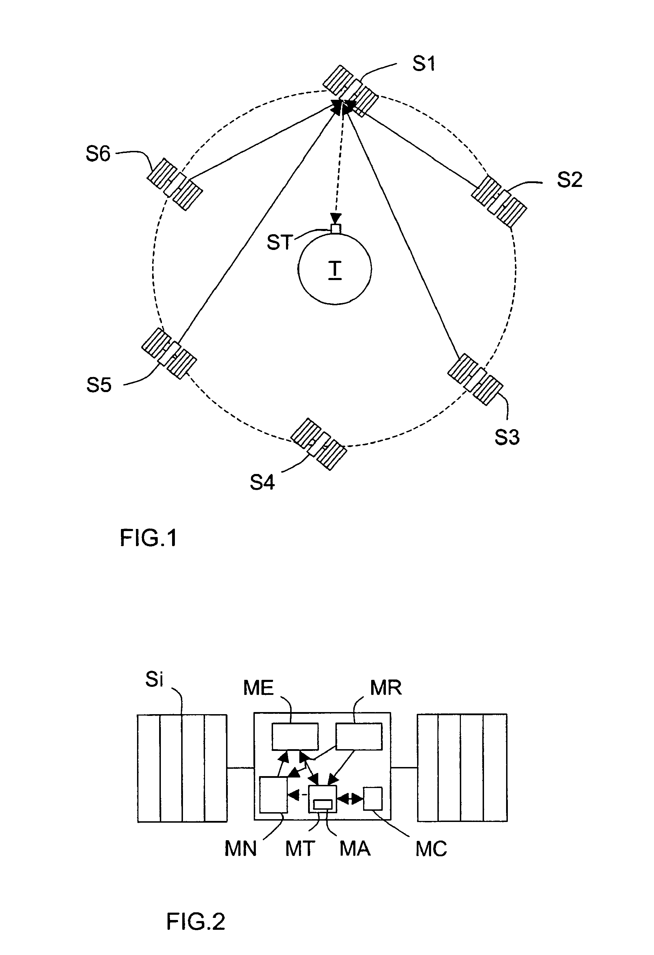

On se réfère tout d'abord à la figure 1 pour présenter un système de radionavigation par satellites.

Un système de radionavigation par satellites peut schématiquement se résumer à une constellation CS de satellites de positionnement Si et des stations de contrôle ST implantées en des endroits choisis de la Terre T.

Par exemple la constellation du futur système GALILEO comporte une trentaine de satellites de positionnement Si (i = 1 à 30), répartis sur des orbites moyennes autour de la Terre T approximativement contenues dans des plans (par exemple trois). Afin de ne pas surcharger la figure 1, seuls six satellites S1 à S6 ont été représentés sur un même plan.

Les stations de contrôle (ou « up-link stations ») ST sont chargées de transmettre par voie hertzienne aux satellites de positionnement Si des informations de navigation et de synchronisation destinées à permettre la synchronisation de leurs horloges internes.

Comme cela est illustré sur la figure 2, chaque satellite de positionnement Si comprend un module de navigation MN chargé de générer des messages destinés à être transmis par voie hertzienne, par un module de transmission ME, notamment en direction de la Terre T afin qu'ils puissent être utilisés par des récepteurs de radionavigation situés sur la Terre T ou dans son voisinage. Par ailleurs, chaque satellite de positionnement Si comprend un module de réception MR chargé de recevoir les informations transmises par les stations de contrôle ST afin de les communiquer au module de navigation MN.

Chaque message, qui est transmis par un satellite (de positionnement) Si, est constitué de signaux dits « opérationnels » qui contiennent des données représentatives de l'identifiant dudit satellite Si et de son instant d'émission par rapport à son horloge interne, notamment.

Lorsqu'un récepteur de radionavigation reçoit un message, il détermine l'identifiant du satellite Si qui l'a émis, puis le temps mis par ce message pour lui parvenir compte tenu de son instant de réception et de l'orbite empruntée par ce satellite identifié Si (stockée dans une table identifiant/orbite), et enfin la pseudo-distance qui le sépare du satellite Si compte tenu de l'instant d'émission du message. Lorsque le récepteur de radionavigation dispose de quatre pseudo-distances qui le séparent de quatre satellites différents, dits « en vue », il est alors en mesure de déterminer sa position spatio-temporelle (X,Y,Z,t).

Toute distorsion de signaux opérationnels, par exemple du fait de perturbations électromagnétiques, est susceptible de limiter la précision de la mesure de position spatio-temporelle.

L'invention propose d'implanter dans chaque satellite Si, d'une constellation CS d'un système de radionavigation, un module de traitement MT en complément de son module de transmission ME, de son module de réception MR et de son module de navigation MN.

Selon l'invention, le module de réception MR d'un satellite Si est chargé de recevoir certains au moins des signaux opérationnels qui sont transmis par les satellites de positionnement Si' de la constellation CS, en vue, et qui étaient jusqu'alors destinés aux récepteurs de radionavigation.

Il est rappelé que dans un système de type GALILEO les signaux opérationnels sont transmis par le module d'émission ME du satellite Si sur la bande de fréquences dite « E1 », centrée sur une fréquence égale à environ 1575,420 MHz, et/ou sur la bande de fréquences dite « E5 », centrée sur une fréquence égale à environ 1191,795 MHz.

Il est important de noter que le module de réception MR, qui est utilisé pour réceptionner les signaux opérationnels, peut être différent de celui utilisé classiquement pour recevoir les informations provenant des stations de contrôle ST. Il peut en effet s'agir d'un module de réception dédié.

Egalement selon l'invention, le module de traitement MT est chargé, d'une part, d'interrompre la transmission des signaux opérationnels par le module de transmission ME à des instants choisis et pendant une durée choisie, et d'autre part, d'analyser lors de chaque interruption de transmission une partie au moins des signaux opérationnels qui ont été reçus par le module de réception MR pendant une partie au moins de la durée choisie.

Le module de traitement MT peut ordonner l'interruption de la transmission des signaux opérationnels soit au niveau du module de navigation MN, soit au niveau du module de transmission ME.

Cette interruption s'effectue préférentiellement de façon périodique. Cela permet en effet de définir pour chaque satellite Si des cycles de période P au cours de chacun desquels se produit une alternance d'une phase de transmission de durée choisie DT et d'une phase d'analyse de durée choisie DA.

Les cycles des satellites Si (au moins ceux qui sont en orbite sensiblement dans le même plan), et donc leurs alternances de phases, sont préférentiellement décalés temporellement les uns des autres. Cela permet en effet à chaque satellite Si de recevoir une fois lors de chaque période P les signaux opérationnels transmis par chaque autre satellite Si' appartenant à un même plan que lui. En d'autres termes, lors de chaque période P chaque satellite Si dispose d'une phase d'analyse DA pendant laquelle il est le seul à interrompre sa transmission de signaux opérationnels.

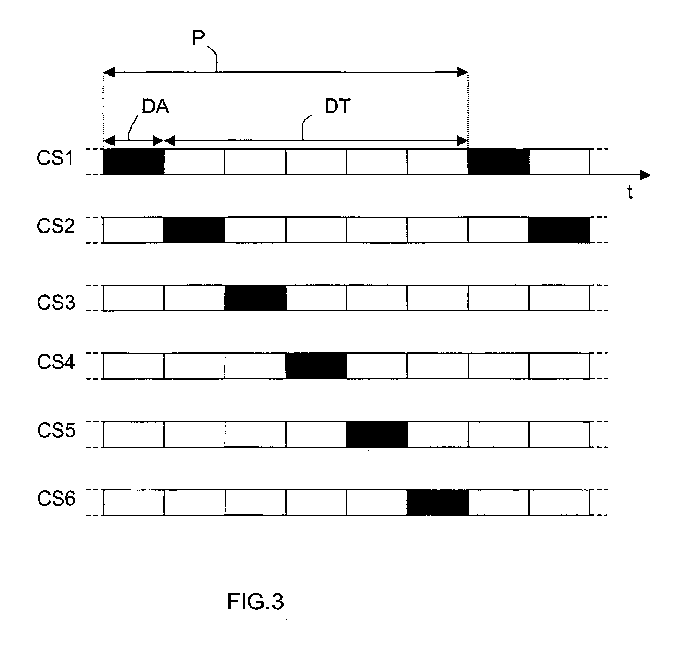

Sur la figure 3 se trouve illustré un exemple de cycles CS1 à CS6 d'alternance de phase de transmission de durée DT et de durée d'analyse DA pour les 6 satellites de positionnement S1 à S6 situés approximativement dans un même plan sur la figure 1. Bien entendu, il ne s'agit que d'un exemple purement illustratif qui peut faire l'objet de très nombreuses variantes.

L'analyse peut porter sur tous les signaux opérationnels reçus pendant la phase d'analyse DA, ou bien seulement sur les signaux opérationnels reçus pendant une partie choisie de la phase d'analyse DA, ou encore sur une partie seulement d'entre eux.

Le module de traitement MT peut être configuré de manière à effectuer une ou plusieurs analyses différentes.

Par exemple, le module d'analyse MA peut être chargé d'analyser les signaux opérationnels reçus afin de déterminer les pseudo-distances qui séparent son satellite Si des satellites en vue Si' qui ont transmis lesdits signaux opérationnels. Pour ce faire, le module d'analyse MA n'a qu'à soustraire l'instant de réception de chaque signal opérationnel à son instant d'émission (défini par les données qu'il contient) puis à multiplier le résultat de cette soustraction par la vitesse de la lumière.

En variante ou en complément, le module de traitement MT peut comporter un module d'analyse MA chargé d'analyser la forme d'onde des signaux opérationnels reçus afin de détecter certaines distorsions de signal représentatives d'anomalies de transmission. On peut par exemple détecter des distorsions de forme d'onde (ou « evil wave form »). Pour ce faire, toute technique peut être envisagée. Par exemple, pour réaliser cette détection on peut implémenter dans le module MA des techniques de traitement du signal reçu basées sur des techniques de corrélation différentes du code du signal reçu avec une réplique de ce code contenue dans une partie logicielle du module MA. A partir de ces corrélations (ou comparaisons), des métriques sont ensuite élaborées et comparées à des seuils prédéfinis. On peut également utiliser des gabarits ou des transformées de Fourier de type FFT.

On peut également prévoir dans chaque satellite Si un module de calcul MC chargé de déterminer sa position à partir des pseudo-distances qui ont été déterminées par le module d'analyse MA et de données de radionavigation complémentaires (du type de celles constituant la table de correspondance identifiant de satellite/orbite que stockent les récepteurs de radionavigation). Le module de calcul MC et une partie au moins du module d'analyse MA (dédiée à la détermination des pseudo-distances) constituent alors ensemble, en quelque sorte, une partie équivalente à celle dédiée à l'acquisition des positions spatio-temporelles dans un récepteur de radionavigation.

Cela est particulièrement avantageux car cela permet de transformer chaque satellite en un navigateur autonome connaissant quasiment à chaque instant sa position spatio-temporelle dans un référentiel choisi.

Contrairement à ce qui est illustré sur la figure 2, le module de calcul MC peut être intégré dans le module de traitement MT.

En complément de l'analyse des signaux opérationnels provenant des satellites en vue Si', le module de traitement MT de chaque satellite Si peut être également chargé d'ordonner aux moyens de transmission la transmission de certains au moins des résultats d'analyse en direction de la Terre T, et donc à au moins une station de contrôle ST du système de radionavigation et/ou à des récepteurs de radionavigation.

Cela est particulièrement avantageux car cela peut permettre de simplifier notablement le travail des récepteurs de radionavigation (lorsque le résultat de l'analyse porte sur les pseudo-distances du satellite Si par rapport aux autres satellites en vue Si', ou mieux encore sur la position spatio-temporelle du satellite Si), et donc d'améliorer les performances de navigation et notamment la précision de la détermination des positions spatio-temporelles des récepteurs de radionavigation.

Le module de traitement MT de chaque satellite Si peut être configuré de manière à ordonner au module de transmission ME de transmettre certains au moins des résultats d'analyse pendant la phase d'analyse DA ou bien après.

On peut également envisager que le module de réception MR de chaque satellite Si soit agencé de manière à recevoir des données opérationnelles complémentaires provenant d'au moins une station de contrôle ST du système de radionavigation et destinés à d'autres satellites Si' de la constellation CS.

Ces données opérationnelles complémentaires peuvent être par exemple des informations de navigation et de synchronisation destinées à permettre la synchronisation des horloges internes, ou des mises à jour de tables identifiant de satellite/orbite, ou toute autre information utile aux analyses internes.

Dans ce cas, le module de traitement MT de chaque satellite Si est avantageusement chargé d'ordonner au module de transmission ME de transmettre les données opérationnelles complémentaires (qui ont été reçues par le module de réception MR) aux satellites Si' en vue qui en sont les destinataires.

Cela est particulièrement avantageux car cela permet de conférer à chaque satellite Si d'une constellation CS un rôle de relayeur d'informations vers les autres satellites Si' qui ne sont pas en mesure de recevoir lesdites informations pendant certains moments de leurs orbites.

Le module de traitement MT et l'éventuel module de calcul MC du satellite de positionnement selon l'invention peuvent être réalisés sous la forme de circuits électroniques, de modules logiciels (ou informatiques), ou d'une combinaison de circuits et de logiciels.

Etant donné que pendant sa phase d'analyse un satellite de positionnement Si ne peut pas transmettre les signaux opérationnels classiques, il peut être avantageux de prévoir dans la constellation CS au moins un satellite de positionnement complémentaire. Par exemple, lorsque les satellites de la constellation sont répartis approximativement suivant trois plans, on peut prévoir un satellite complémentaire dans chaque plan. On peut également utiliser le satellite de réserve qui est généralement prévu au sein de certaines constellations pour être substitué à un satellite défaillant.

L'invention offre un certain nombre d'avantages séparément ou en combinaison, selon les fonctionnalités des variantes envisagées, parmi lesquels :
- l'amélioration de la détermination des orbites réelles des satellites de positionnement et de la synchronisation inter-satellites, permettant notamment d'atteindre des précisions sur les positions spatio-temporelles typiquement inférieures à environ 70 cm et une erreur combinée sur les précisions des orbites et des horloges de l'ordre de 1 σ (sigma),
- la possibilité de transformer chaque satellite de positionnement en un navigateur autonome,
- la possibilité de détecter et d'isoler des anomalies de transmission.

L'invention ne se limite pas aux modes de réalisation de satellite de positionnement et de système de radionavigation par satellites décrits ci-avant, seulement à titre d'exemple, mais elle englobe toutes les variantes que pourra envisager l'homme de l'art dans le cadre des revendications ci-après.

## Revendications

1. Satellite de positionnement (Si) pour une constellation de satellites (CS) d'un système de radionavigation, chaque satellite (Si) de ladite constellation (CS) comportant des moyens de transmission (ME) agencés pour transmettre des signaux opérationnels destinés à permettre la détermination de positions de récepteurs de radionavigation, **caractérisé en ce qu'**il comprend des moyens de réception (MR) propres à recevoir certains au moins des signaux opérationnels transmis par des satellites de positionnement (Si') de ladite constellation (CS), en vue, et des moyens de traitement (MT) agencés pour i) interrompre la transmission des signaux opérationnels par lesdits moyens de transmission (ME) à des instants choisis et pendant une durée choisie, et ii) analyser lors de chaque interruption de transmission une partie au moins des signaux opérationnels reçus par lesdits moyens de réception (MR) pendant une partie au moins de ladite durée choisie.

2. Satellite de positionnement selon la revendication 1, **caractérisé en ce que** lesdits moyens de traitement (MT) sont agencés pour interrompre la transmission de façon périodique, de manière à établir une alternance de phases de transmission et de phases d'analyse.

3. Satellite de positionnement selon la revendication 2, **caractérisé en ce que** ladite alternance est décalée temporellement d'un satellite de positionnement de ladite constellation (CS) à un autre, de sorte qu'à l'intérieur de chaque période chaque satellite de positionnement (Si) de ladite constellation (CS) dispose d'une phase d'analyse pendant laquelle il est le seul à interrompre sa transmission de signaux opérationnels.

4. Satellite de positionnement selon l'une des revendications 1 à 3, **caractérisé en ce que** lesdits moyens de traitement (MT) sont agencés pour analyser une forme d'onde desdits signaux opérationnels reçus de manière à détecter des distorsions de signal représentatives d'anomalies de transmission et constituant des résultats d'analyse.

5. Satellite de positionnement selon l'une des revendications 1 à 4, **caractérisé en ce que** lesdits moyens de traitement (MT) sont agencés pour analyser lesdits signaux opérationnels reçus de manière à déterminer des pseudo-distances séparant leur satellite (Si) des satellites en vue (Si'), desquels proviennent lesdits signaux opérationnels, lesdites pseudo-distances constituant des résultats d'analyse.

6. Satellite de positionnement selon la revendication 5, **caractérisé en ce qu'**il comprend des moyens de calcul (MC) agencés pour déterminer la position de leur satellite (Si) à partir desdites pseudo-distances déterminées par lesdits moyens de traitement (MT) et de données de radionavigation complémentaires, chaque position déterminée constituant un résultat d'analyse.

7. Satellite de positionnement selon l'une des revendications 4 à 6, **caractérisé en ce que** lesdits moyens de traitement (MT) sont agencés pour ordonner auxdits moyens de transmission (ME) la transmission de certains au moins desdits résultats d'analyse à au moins une station terrestre (ST) dudit système de radionavigation et/ou à des récepteurs de radionavigation.

8. Satellite de positionnement selon la revendication 7, **caractérisé en ce que** lesdits moyens de traitement (MT) sont agencés pour ordonner auxdits moyens de transmission (ME) la transmission desdits résultats d'analyse pendant une phase d'analyse.

9. Satellite de positionnement selon l'une des revendications 1 à 8, **caractérisé en ce que** lesdits moyens de réception (MR) sont agencés pour recevoir des données opérationnelles complémentaires provenant d'au moins une station terrestre (ST) dudit système de radionavigation et destinées à d'autres satellites de positionnement (Si') de ladite constellation (CS), et **en ce que** lesdits moyens de traitement (MT) sont agencés pour ordonner aux dits moyens de transmission (ME) la transmission desdites données opérationnelles complémentaires reçues par lesdits moyens de réception (MR) aux satellites de positionnement (Si') qui en sont les destinataires.

10. Système de radionavigation, **caractérisé en ce qu'**il comprend une constellation (CS) de satellites de positionnement (Si) selon l'une des revendications précédentes.

## Claims

1. A positioning satellite (Si) for a constellation of satellites (CS) of a radionavigation system, each satellite (Si) of said constellation (CS) including transmitter means (ME) adapted to transmit operational signals intended to enable the determination of positions of radionavigation receivers, which satellite is **characterised in that** it includes receiver means (MR) adapted to receive at least some of the operational signals transmitted by positioning satellites (Si') of said constellation (CS) that are in view and processor means (MT) adapted to interrupt transmission of the operational signals by said transmitter means (ME) at selected times for a selected duration and to analyse during each transmission interruption at least some of the operational signals received by said receiver means (MR) during at least a portion of said selected duration.

2. A positioning satellite according to claim 1, **characterised in that** said processor means (MT) are adapted to interrupt transmission periodically to establish an alternation of transmission phases and analysis phases.

3. A positioning satellite according to claim 2, **characterised in that** said alternation is offset in time from one positioning satellite of said constellation (CS) to another so that in each period each positioning satellite (Si) of said constellation (CS) has an analysis phase during which it is the only one to interrupt its transmission of operational signals.

4. A positioning satellite according to one of claims 1 to 3, **characterised in that** said processor means (MT) are adapted to analyse the waveform of said received operational signals in order to detect signal distortion representing transmission anomalies and constituting analysis results.

5. A positioning satellite according to one of claims 1 to 4, **characterised in that** said processor means (MT) are adapted to analyse said received operational signals in order to determine pseudodistances between their satellite (Si) and the satellites in view (Si') from which said operational signals come, said pseudodistances constituting analysis results.

6. A positioning satellite according to claim 5, **characterised in that** it includes calculator means (MC) adapted to determine the position of their satellite (Si) from said pseudodistances determined by said processor means (MT) and complementary radionavigation data, each position determined constituting an analysis result.

7. A positioning satellite according to one of claims 4 to 6, **characterised in that** said processor means (MT) are adapted to instruct said transmitter means (ME) to transmit at least some of said analysis results to at least one terrestrial station (ST) of said radionavigation system and/or to radionavigation receivers.

8. A positioning satellite according to claim 7, **characterised in that** said processor means (MT) are adapted to instruct said transmitter means (ME) to transmit said analysis results during an analysis phase.

9. A positioning satellite according to one of claims 1 to 8, **characterised in that** said receiver means (MR) are adapted to receive complementary operating data from at least one terrestrial station (ST) of said radionavigation system and intended for other positioning satellites (Si') of said constellation (CS) and **in that** said processor means (MT) are adapted to instruct said transmitter means (ME) to transmit said complementary operating data received by said receiver means (MR) to the positioning satellites (Si') that are the destinations thereof.

10. A radionavigation system **characterised in that** it includes a constellation (CS) of positioning satellites (Si) according to one of the preceding claims.

## Patentansprüche

1. Ortungssatellit (Si) für eine Satellitenkonstellation (CS) eines Radionavigationssystems, wobei jeder Satellit (Si) der besagten Konstellation (CS) Übertragungsmittel (ME) umfasst, welche zur Übertragung von operativen Signalen, die dazu bestimmt sind, die Bestimmung der Positionen von Radionavigationsempfängern zu ermöglichen, angeordnet sind, **dadurch gekennzeichnet, dass** er geeignete Empfangsmittel (MR) für den Empfang von mindestens bestimmten operativen Signalen, welche von Ortungssatelliten (Si') der besagten Konstellation (CS) übertragen werden, und Verarbeitungsmittel (MT), welche angeordnet sind, um i) die Übertragung der operativen Signale durch die besagten Übertragungsmittel (ME) zu gewählten Zeitpunkten und während einer gewählten Dauer zu unterbrechen, und ii) bei jeder Übertragungsunterbrechung zumindest einen Teil der von den besagten Empfangsmitteln (MR) empfangenen operativen Signale während zumindest einem Teil der besagten gewählten Dauer zu analysieren.

2. Ortungssatellit nach Anspruch 1, **dadurch gekennzeichnet, dass** die besagten Verarbeitungsmittel (MT) derart angeordnet sind, dass die Übertragung periodisch unterbrochen wird, um ein Wechseln zwischen Übertragungsphasen und Analysephasen zu ermöglichen.

3. Ortungssatellit nach Anspruch 2, **dadurch gekennzeichnet, dass** das besagte Wechseln von einem Ortungssatelliten der besagten Konstellation (CS) zu einem anderen zeitlich versetzt ist, so dass jeder Ortungssatellit (Si) der besagten Konstellation (CS) innerhalb jeder Periode über eine Analysephase verfügt, während welcher er der einzige ist, seine Übertragung von operativen Signalen zu unterbrechen.

4. Ortungssatellit nach einem der Ansprüche 1 bis 3, **dadurch gekennzeichnet, dass** die besagten Verarbeitungsmittel (MT) angeordnet sind, um eine Wellenform der besagten empfangenen operativen Signale zu analysieren, um Signalverzerrungen, welche für Anomalien in der Übertragung repräsentativ sind und Analyseergebnisse darstellen, zu ermitteln.

5. Ortungssatellit nach einem der Ansprüche 1 bis 4, **dadurch gekennzeichnet, dass** die besagten Verarbeitungsmittel (MT) angeordnet sind, um die besagten empfangenen operativen Signale zu analysieren, um Pseudo-Entfernungen zwischen ihrem Satellit (Si) und den sichtbaren Satelliten (Si'), von welchen die besagten operativen Signale kommen, zu ermitteln, wobei die besagten Pseudo-Entfemungen Analyseergebnisse darstellen.

6. Ortungssatellit nach Anspruch 5, **dadurch gekennzeichnet, dass** er Berechnungsmittel (MC) umfasst, welche angeordnet sind, um die Position ihres Satelliten (Si) ausgehend von den besagten Pseudo-Entfernungen, welche von den besagten Verarbeitungsmitteln (MT) ermittelt wurden, und von zusätzlichen Radionavigationsdaten zu ermitteln, wobei jede ermittelte Position ein Analyseergebnis darstellt.

7. Ortungssatellit nach einem der Ansprüche 4 bis 6, **dadurch gekennzeichnet, dass** die besagten Verarbeitungsmittel (MT) angeordnet sind, um den besagten Übertragungsmitteln (ME) die Übertragung von zumindest bestimmten der besagten Analyseergebnisse an mindestens eine terrestrische Station (ST) des besagten Radionavigationssystems und/oder an Radionavigationsempfänger zu befehlen.

8. Ortungssatellit nach Anspruch 7, **dadurch gekennzeichnet, dass** die besagten Verarbeitungsmittel (MT) angeordnet sind, um den besagten Übertragungsmitteln (ME) die Übertragung der besagten Analyseergebnisse während einer Analysephase zu befehlen.

9. Ortungssatellit nach einem der Ansprüche 1 bis 8, **dadurch gekennzeichnet, dass** die besagten Empfangsmittel (MR) angeordnet sind, um zusätzliche operative Daten von mindestens einer terrestrischen Station (ST) des besagten Radionavigationssystems, welche für andere Ortungssatelliten (Si') der besagten Konstellation (CS) bestimmt sind, zu empfangen, und **dadurch**, dass die besagten Verarbeitungsmittel (MT) angeordnet sind, um den besagten Übertragungsmitteln (ME) die Übertragung der besagten von den besagten Empfangsmittel (MR) empfangenen zusätzlichen operativen Daten an die Ortungssatelliten, für welche sie bestimmt sind, zu befehlen.

10. Radionavigationssystem, **dadurch gekennzeichnet, dass** es eine Konstellation (CS) von Ortungssatelliten (Si) gemäß einem der vorstehenden Ansprüche umfasst.
